(19) Europäisches Patentamt
European Patent Office
Office européen des brevets

(11) EP 4 470 663 A2

(12) **EUROPEAN PATENT APPLICATION**

(43) Date of publication:
**04.12.2024 Bulletin 2024/49**

(21) Application number: **24207745.1**

(22) Date of filing: **19.09.2023**

(51) International Patent Classification (IPC):
***B01J 8/00*** *(2006.01)*

(52) Cooperative Patent Classification (CPC):
**C01B 3/26; B01J 8/10;** B01J 19/20; B01J 23/745; B01J 35/31; B01J 35/40; C01B 2203/04; C01B 2203/043; C01B 2203/1047

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.10.2022 KR 20220128653**
**02.05.2023 KR 20230056859**

(62) Document number(s) of the earlier application(s) in accordance with Art. 76 EPC:
**23198211.7 / 4 349 772**

(71) Applicant: **SK Innovation Co., Ltd.**
**Seoul 03188 (KR)**

(72) Inventors:
- **YUN, Dong Min**
  **34124 Daejeon (KR)**
- **JANG, Jung Geun**
  **34124 Daejeon (KR)**
- **LEE, Ji Hoon**
  **34124 Daejeon (KR)**
- **CHA, Ye Rhee**
  **34124 Daejeon (KR)**

(74) Representative: **Frick, Robert**
**Lorenz Seidler Gossel**
**Rechtsanwälte Patentanwälte**
**Partnerschaft mbB**
**Widenmayerstraße 23**
**80538 München (DE)**

Remarks:
This application was filed on 21.10.2024 as a divisional application to the application mentioned under INID code 62.

(54) **METHOD FOR PRODUCING HYDROGEN, CARBON MONOXIDE, AND CARBON FROM METHANE-CONTAINING FEEDSTOCK**

(57) The present invention relates to a single process for producing hydrogen, carbon monoxide, and carbon from methane by forming gas products comprising hydrogen and carbon monoxide, and solid products comprising carbon and an iron-based catalyst from methane in a methane-containing feedstock through pyrolysis route involving auto-thermal reduction in a rotary kiln-type reactor in the presence of an iron-based catalyst and separating and recovering respective products.

EP 4 470 663 A2

## Description

BACKGROUND OF THE INVENTION

Field of the Invention

The present invention relates to a method for producing hydrogen, carbon monoxide, and carbon from a methane-containing feedstock. More particularly, the present invention relates to a method for producing hydrogen, carbon monoxide, and carbon from methane in a single process, by forming gas products comprising hydrogen and carbon monoxide, and solid products comprising carbon and an iron-based catalyst from methane in a methane-containing feedstock through pyrolysis route involving auto-thermal reduction in a rotary kiln-type reactor in the presence of an iron-based catalyst and separating and recovering respective products.

Description of the Related Art

Methane is the most abundant compound in natural gas, and accounts for twice the amount of carbon as other known fossil fuel sources. Specifically, it has been reported that natural gas reserves are more extensive than those of coal and oil put together. With the gradual depletion of coal and oil reserves, utilization of natural gas is having a significant impact on the global energy balance. Hence, supply of natural gas such as methane is expected to last for more than 20 years longer than petroleum resources, and thus natural gas is emerging as the most realistic alternative raw material to replace petroleum in the era of depletion of petroleum resources and high oil prices. Accordingly, thorough research into producing high value-added materials from methane is ongoing.

In order to produce high value-added materials from methane, a method of directly converting methane is known, and is representatively exemplified by an oxidative or nonoxidative coupling reaction of methane (e.g. Korean Patent Application Publication No. 10-2018-0113448, etc.). In particular, hydrogen may be formed when methane is converted into high-value C2+ hydrocarbons through coupling reaction. Hydrogen has high energy efficiency per unit mass, and generates only water during combustion without other harmful byproducts. Based on these advantageous properties, the value of hydrogen as a clean energy source has recently been increasing.

In this regard, as other reaction routes for producing hydrogen from methane, a steam reforming reaction ($CH_4 + H_2O \rightarrow 3H_2$), and a partial oxidation reaction of methane ($CH_4 + 1/2O_2 \rightarrow 2H_2$) are known. However, such reactions are problematic in that a large amount of energy input is required due to high endothermic characteristics or $CO_2$ is discharged as a byproduct.

Meanwhile, a method for producing hydrogen from methane by a pyrolysis reaction ($CH_4 \rightarrow 2H_2$) in the presence of a catalyst such as an iron oxide ($Fe_2O_3$) catalyst has been developed. The economic feasibility of the entire method may be improved when the generated hydrogen is effectively recovered and utilized (Int. J. Hydrogen Energy, Vol. 18, No. 3, pp. 211-215). Moreover, carbon generated together with hydrogen during the methane pyrolysis may be used as a fuel, and as well, may be used as an electrode material (especially an anodic material) for a secondary battery, further increasing value thereof. This pyrolysis reaction does not generate greenhouse gases such as carbon dioxide due to the nature of the reaction.

Alternatively, a method of pyrolyzing methane by an auto-thermal reduction route in the presence of an iron-based catalyst such as iron oxide is known. This method is capable of producing hydrogen and carbon without generating carbon dioxide, and also of further producing carbon monoxide as a semi-finished product. In this regard, a fluidized-bed reactor is known to be typically applied to auto-thermal reduction of methane. However, in the case in which an iron-based catalyst is used in a fluidized-bed reactor, difficulty of fluidization operation increases due to a change in the particle density depending on the progress of the reaction, and design of the reactor for continuous operation becomes complicated.

As such, there is a need for a method capable of solving the problems of conventional techniques and at the same time producing high value-added materials, especially hydrogen and carbon-based materials, from methane having a relatively low value.

SUMMARY OF THE INVENTION

The present invention aims to provide a method of efficiently producing high-purity hydrogen, carbon monoxide, and carbon from methane in a single system and process.

The present invention further aims to provide a method of alleviating, using a rotary kiln reactor, problems such as difficulty in continuous operation that may occur when solid catalyst particles are used for methane pyrolysis in the typical fluidized-bed reactor.

Against this background, the present invention proposes a method for producing hydrogen ($H_2$), carbon mon-

oxide (CO), and carbon (C) from methane, wherein the method comprises:

a) forming pyrolysis products containing unreacted methane, carbon, hydrogen, and carbon monoxide by introducing a methane-containing feedstock and an iron oxide-containing catalyst in the form of solid particles into a rotary kiln-type reactor,
b) separating a gas mixture containing the unreacted methane, the hydrogen, and the carbon monoxide and an iron (Fe)-containing carbon-based solid from the pyrolysis products through gas-solid separation, and
c) separating the gas mixture into unreacted methane, hydrogen and carbon monoxide, respectively.

According to an embodiment, in the gas mixture, a molar ratio of hydrogen ($H_2$)/carbon monoxide (CO) may be adjusted in a range of 20 to 70, and a molar ratio of hydrogen ($H_2$)/methane ($CH_4$) may be adjusted in a range of 1 to 60.
According to an embodiment, the methane-containing feedstock and the iron oxide-containing catalyst in the form of solid particles may be introduced into the rotary kiln-type reactor in a co-current flow manner.
According to an embodiment, the rotary kiln-type reactor may comprises:

a tube configured to accommodate solid particles and gas and to be rotatable;
a heater configured to supply controlled heat to an inner space of the tube;
a helix baffle configured to extend along an inner circumferential surface of the tube to induce the introduced iron oxide-containing catalyst in the form of solid particles to move forward in a longitudinal direction of the tube according to rotation of the tube; and
at least one lifter provided on the inner circumferential surface of the tube corresponding to at least one among pitches of the helix baffle to disperse the introduced iron oxide-containing catalyst in the form of solid particles in the tube.

According to an embodiment, the at least one lifter may have at least one of a straight shape or a bent shape.
According to an embodiment, the bent shape may be a shape bent in an oblique line or a shape bent at a right (or perpendicular) angle.
According to an embodiment, in the rotary kiln-type reactor, a rotational speed of the tube may be adjusted in a range of 0.05 to 5 rpm, and a residence time of the iron oxide-containing catalyst in the form of solid particles may be adjusted in a range of 1 to 150 hours.
According to an embodiment, a helix angle of the helix baffle may be adjusted in a range of 30 to 60°.
According to an embodiment, a pitch length of the helix baffle may range from 1/60 to 1/6 of a length of the tube.
According to an embodiment, a height of the helix baffle may be adjusted in a range of 1/10 to 1/2 of an inner diameter of the tube, and a height of the lifter may be adjusted in a range of 1/10 to 1/2 of the inner diameter of the tube.
According to an embodiment, a ratio of a length to an inner diameter of the tube (L/D) may be set in a range of 5 to 50.
According to an embodiment, the iron oxide-containing catalyst in the form of solid particles may have an apparent density of 0.7 to 2.8 g/cm$^3$, and the iron (Fe)-containing carbon-based solid may have an apparent density of 0.05 to 1.5 g/cm$^3$.
According to an embodiment, an angle of repose of the iron (Fe)-containing carbon-based solid may be at least 10°.
According to an embodiment, the carbon in the pyrolysis products may be graphitic carbon.

## BRIEF DESCRIPTION OF THE DRAWINGS

The above and other objects, features, and other features of the present invention will be more clearly understood from the following detailed description taken in conjunction with the accompanying drawings, in which:

FIG. 1 schematically shows a method for producing hydrogen, carbon monoxide, and a carbon-based material in a single process from a methane-containing feedstock according to an embodiment;
FIG. 2 shows the overall structure of a rotary kiln reactor applicable to pyrolysis of a methane-containing feedstock according to an embodiment;
FIGS. 3A to 3C are a side view, a plan view, and a front view showing a combination of a helix baffle and lifters (one lifter per pitch) on the inner circumferential surface of a tube of a rotary kiln reactor according to an embodiment;
FIG. 4 schematically shows a process in which catalyst particles are divided by lifters in the tube of the rotary kiln reactor having a combination of a helix baffle and lifters;
FIGS. 5A to 5C are a side view, a plan view, and a front view showing a combination of a helix baffle and lifters (four lifters per pitch) on the inner circumferential surface of a tube of a rotary kiln reactor according to another embodiment;

FIGs. 6A to 6C are front views showing various examples of lifter shapes in the tube of a rotary kiln reactor;
FIG. 7 is a graph showing methane conversion depending on TOS (time on stream) in Example 1;
FIG. 8 is a graph showing methane conversion depending on TOS (time on stream) in Example 2;
FIG. 9 is a graph showing methane conversion depending on TOS (time on stream) in Comparative Example 1;
FIG. 10 is a graph showing methane conversion depending on TOS (time on stream) in Comparative Example 2;
FIG. 11 is a graph showing hydrogen yield depending on TOS (time on stream) in Example 3;
Fig. 12 shows the X-ray diffraction (XRD) patterns of red mud and iron ore, respectively;
Fig. 13 is a graph showing methane conversion depending on TOS (time on stream) when performing methane pyrolysis reaction by use of red mud and iron ore, respectively, as catalysts, under the same experimental conditions based on the same iron content;
Fig. 14 is a graph showing methane conversion depending on TOS (time on stream) in Example 5;
Fig. 15 is a graph showing methane conversion depending on TOS (time on stream) in Comparative Example 3; and
Fig. 16 is a graph showing methane conversion depending on TOS (time on stream) in Comparative Example 4.

## DETAILED DESCRIPTION OF THE INVENTION

Terms used herein may be defined as follows.

The term "carbon" or "carbon-based material" may refer to elemental carbon having an arbitrary structure in a broad sense and may be understood as a concept including various forms, such as a graphitic form, and an amorphous form (e.g. carbon black and activated carbon), and may refer to graphitic carbon or carbon-based material in a narrow sense.

The term "pyrolysis" may refer to a reaction in which hydrocarbons are decomposed upon exposure to heat without addition of oxygen or oxygen-containing reactants, and in the present disclosure, may refer to a reaction that converts a compound into one or more other materials by applying heat thereto.

The term "conversion" may refer to the number of moles of the feedstock converted into a compound other than the feedstock per unit mole thereof.

The term "selectivity" may refer to the number of moles of a target product per unit mole of the converted feedstock.

The term "pitch" may refer to a distance or spacing between a screw thread and an adjacent screw thread (or a valley and an adjacent valley).

The term "angle of repose" may refer to a maximum inclination angle at which the slope face of a solid may be stabilized (i.e. the steepest angle of descent relative to the horizontal plane on which a solid granular material can be piled without slumping). The angle of repose is an inherent property of a granular material, and each granular material may have a unique angle of repose. The angle of repose may be determined, for example according to DIN EN 12047.

The term "helix angle" may refer to an angle between a tangent to the helix and an axis of the helix.

The term "hydrogen yield" may refer to a ratio of mass of hydrogen produced per mass of active metal, where the unit may be represented as $gH_2/gFe$.

According to an embodiment of the present invention, a method is provided in a manner in which methane in a methane-containing feedstock is converted into gaseous hydrogen and carbon monoxide and solid carbon (or a carbon-based material) in a single process by reaction mechanisms (or routes) including auto-thermal reduction, followed by separation and recovery thereof. A process configuration according to an embodiment for illustrative purpose is as shown in FIG. 1.

With reference to the drawing, the methane-containing feedstock may be gaseous and may be introduced into a methane pyrolysis process 100 via line 1.

The methane-containing feedstock may be at least one selected from among pure methane, liquefied natural gas, natural gas, a mixed gas composed mainly of methane (for example, at least 50 vol%, for example at least 80 vol%, for example at least 90 vol%). In this regard, natural gas mainly contains methane, and may further comprise, in addition to methane, a hydrocarbon gas component (e.g. at least one selected from the group consisting of ethane, propane, and heavier hydrocarbons) and/or a diluent gas (e.g. at least one selected from the group consisting of nitrogen, oxygen, carbon dioxide, helium, and hydrogen sulfide). Here, the concentration of the diluent gas in the feedstock may be, for example, 15 vol% or less, for example 12 vol% or less, or for example 10 vol% or less. According to a specific embodiment, the methane-containing feedstock may be pure methane.

In an embodiment, the methane-containing feedstock is combined with an iron oxide-containing catalyst in the form of solid particles supplied via line 3, and the gaseous methane-containing feedstock and the iron oxide-containing catalyst are introduced into a rotary kiln-type reactor A via line 2.

In this regard, hydrogen is typically produced from methane by steam reforming, but in this reaction route, carbon dioxide is generated together with hydrogen, causing greenhouse gases. Moreover, methane, which is a stable nonpolar molecule as an inert gas, has C-H binding energy of 435 kJ/mol, and thus has high thermodynamic stability

and is not easily decomposed.

Therefore, to cleave the strong C-H bonds of methane molecules, pyrolysis reaction in the pyrolysis reactor A involves or includes auto-thermal reduction in which the iron oxide-containing catalyst is reduced using methane as a reducing agent. Here, auto-thermal reduction in the presence of an iron oxide-containing catalyst may be based on a reaction mechanism represented in Scheme 1 below.

[Scheme 1] $$Fe_2O_3 + 3CH_4 \rightarrow 2Fe + 3CO + 6H_2$$

As represented in the reaction scheme, the iron oxide-containing catalyst is converted to a reduced form (particularly, elemental iron) due to reaction with methane. In this auto-thermal reduction, unlike the steam reforming reaction of methane, carbon dioxide is not generated, carbon monoxide is formed as well as hydrogen, and iron oxide is reduced to elemental iron, which may be employed as a catalyst. For example, the iron thus reduced may act as an active catalyst for methane pyrolysis to produce solid carbon (C) and $H_2$.

According to an embodiment, the iron oxide-containing catalyst may be at least one selected from among, for example, iron oxide, iron ore, iron-supported catalyst and red mud. In this regard, iron oxide is largely known as eight types depending on the oxidation state thereof, but in view of supply and demand, iron ore including hematite ($\alpha$-$Fe_2O_3$) or maghemite ($\gamma$-$Fe_2O_3$) with the chemical formula of $Fe_2O_3$ is favorably used. Typically, the amount of iron (Fe) (elemental basis) in iron ore may fall in the range of, for example, 60 to 70 wt%, for example 62 to 68 wt%, or for example 64 to 66 wt%. Here, the amount of iron may vary depending on the origin thereof.

Also, for the iron-supported catalyst, the support may be a porous inorganic oxide material such as alumina ($Al_2O_3$), silica ($SiO_2$), magnesia (MgO), titania ($TiO_2$), zirconia ($ZrO_2$), etc. Illustratively, the porous support may have a specific surface area (Brunauer-Emmett-Teller; BET) of 100 to 200 $m^2/g$ (for example 130 to 180 $m^2/g$, for example 150 to 170 $m^2/g$) and a pore volume of 0.4 to 1 $cm^3/g$ (for example 0.5 to 0.9 $cm^3/g$, for example 0.6 to 0.8 $cm^3/g$). Moreover, the amount of iron (which may be in the form of elemental iron and/or iron oxide) in the iron-supported catalyst may fall in the range of, for example, 5 to 40 wt%, for example 7 to 20 wt%, for example 9 to 15 wt%.

According to an embodiment, red mud may be used as the iron oxide-containing catalyst. Red mud is waste residue generated in the process of manufacturing alumina from bauxite, and contains a significant amount of iron oxide. In an embodiment, red mud may be provided in the form in which red mud is used alone, or alternatively, in which red mud is used in combination with other iron oxide-containing catalysts as described above (e.g., iron oxide, iron ore, and/or iron-supported catalyst). Red mud may exhibit properties of a mixed oxide containing iron oxide and aluminum oxide as main components, and may have various compositions depending on the source thereof (e.g. a bauxite processing plant). Exemplary compositional ranges of the main ingredients constituting red mud may be shown in Table 1 below, but are not limited thereto.

[Table 1]

| Component | Amount |
|---|---|
| $Fe_2O_3$ | For example, 20 to 70 wt%, 30 to 60 wt%, or 35 to 40 wt% |
| $Al_2O_3$ | For example, 5 to 40 wt%, 10 to 30 wt%, or 15 to 25 wt% |
| $SiO_2$ | For example, 0 to 30 wt%, 5 to 25 wt%, or 10 to 20 wt% |
| $TiO_2$ | For example, 0 to 30 wt%, 5 to 20 wt%, or 7 to 15 wt% |
| $Na_2O$ | For example, 0 to 20 wt%, 2 to 15 wt%, or 5 to 10 wt% |
| CaO | For example, 0 to 20 wt%, 2 to 15 wt%, or 5 to 10 wt% |

Red mud may further contain additional ingredients ($K_2O$, $P_2O_5$, MnO, etc.) as well as the ingredients listed in the table above, and the amount of such additional ingredients may be, for example, 5 wt% or less, for example 3 wt% or less, or for example 1.5 wt% or less. In this regard, since iron oxide ($Fe_2O_3$) in red mud acts as the main catalytic component of catalytic pyrolysis of methane, an increase in the amount of iron oxide may facilitate the conversion of methane during pyrolysis, and also affect the yield of hydrogen, carbon, and/or carbon monoxide. According to an embodiment, LOI (loss on ignition) of red mud may be, for example, 20 wt% or less, for example 3 to 15 wt%, or for example 5 to 12 wt%, which may be understood for illustrative purposes.

The iron oxide (e.g. $Fe_2O_3$)-containing catalyst in the form of solid particles may have an average particle size of, for example, 20 to 500 $\mu$m, for example 45 to 425 $\mu$m, for example 100 to 300 um, or for example 106 to 180 $\mu$m, when analyzed by a sieve method. Since the particle size (or size) of the iron oxide-containing catalyst may affect catalytic

reaction and transfer in a rotary kiln (when the particle size thereof is too small, injection using a supply unit or a feeder may become difficult), it may be advantageously adjusted in the above range.

According to an embodiment, when a red mud-containing catalyst is introduced into the process 100, a specific surface area (BET) thereof may be, for example, 10 to 50 $m^2/g$, 20 to 40 $m^2/g$, or 25 to 30 $m^2/g$. In addition, the pore size (average diameter) may be, for example, 10 to 50 nm, for example 15 to 40 nm, for example 18 to 30 nm, or for example 20 to 25 nm. However, the aforementioned pore characteristics may be understood for illustrative purposes.

Meanwhile, for example, when iron ore and/or red mud is used as a catalyst, it may be pulverized to an appropriate size (particle size). Here, pulverization may be performed using means known in the art. Examples of the pulverization means may include a roller-type grinder, a vibrating mill, a ball mill, a port mill, a hammer mill, a pulverizer, a gyratory grinder, and a gyratory mill. A combination of two or more thereof may also be used for pulverization.

Also, when the pyrolysis system is built on lab-scale, the flow rate (standard liter per minute; slm) of the methane-containing feedstock supplied to the reactor may be adjusted in the range of, for example, 0.5 to 5 slm, for example 1 to 3 slm, for example 1.2 to 2.5 slm, for example 1.3 to 2 slm, or for example 1.5 to 1.9 slm. Moreover, the flow rate of the iron oxide-containing catalyst may be adjusted in the range of, for example, 15 to 80 cc/hr, for example 18 to 65 cc/hr, for example 25 to 55 cc/hr, or for example 31 to 50 cc/hr. In a commercial method, however, the absolute value of each of the flow rate of the methane-containing feedstock and the flow rate of the iron oxide-containing catalyst may increase and thus may be adjusted in consideration of the ratio between the flow rate of the feedstock and the flow rate of the catalyst. For example, based on the ratio of the flow rate of the catalyst divided by the flow rate of methane, the value may range from 0.05 to 2.6, for example from 0.1 to 1, for example 0.15 to 0.7, or for example from 0.2 to 0.6. However, the above numerical ranges may be understood exemplarily.

In the illustrated embodiment, the methane-containing feedstock and the iron oxide-containing catalyst in the form of solid particles are introduced into a rotary kiln-type reactor in a co-current flow manner. The reason why the catalyst and the methane-containing feedstock are introduced in the co-current flow manner is that introduction thereof in a counter-current manner may cause production of water ($H_2O$) and consumption of hydrogen due to reaction between hydrogen generated during pyrolysis and iron oxide ($Fe_2O_3$) in the introduced catalyst.

According to an embodiment, the methane pyrolysis reactor A is a rotary kiln-type reactor, the use of which may solve problems related to auto-thermal reduction of methane using a fluidized-bed reactor, such as increased operation difficulties due to a change in particle density and difficulty in continuous operation. In particular, the rotary kiln-type reactor is less affected by the particle size of the catalyst and is easy to operate due to a large density difference between the iron oxide-containing catalyst used in the pyrolysis and the carbon produced by reaction (e.g. appearance density of iron ore: 2.24 $g/cm^3$, appearance density of red mud: 1.04 $g/cm^3$, apparent density of carbon: 0.14 $g/cm^3$).

Also, as the pyrolysis proceeds, the carbon-based material attached to the iron-based solid particles has a high angle of repose (52°), such that volume utilization inside the rotary kiln increases, and accordingly the residence time of the solid increases, raising reactivity (e.g. the pyrolysis may proceed in a way that at least 10%, for example 30 to 50% of the volume of the rotary kiln reactor is filled with solid). The angle of repose of the iron (Fe)-containing carbon-based solid produced by pyrolysis may be, for example, at least 10°, for example at least 30°, for example at least 50°.

In this regard, the residence time ($\tau$) of the solid in the rotary kiln-type reactor is proportional to the length/diameter ratio (L/2r) of the kiln and the angle of repose ($\varphi$), and is inversely proportional to the inclination and rotational speed of the kiln, and may be represented by Equation 1 below.

[Equation 1]

$$\tau = \frac{L\sin(\varphi)}{2\pi r \omega \Phi}$$

Here, L is the length of the kiln (or tube in the rotary kiln), $\varphi$ is the angle of repose, r is the radius of the kiln (or tube in the rotary kiln), $\Phi$ is the inclination of the kiln, and $\omega$ is the rotational speed.

According to an embodiment, the reaction temperature (pyrolysis temperature) in the rotary kiln-type reactor may be adjusted in the range of, for example, 600 to 1,000°C, for example 700 to 950 °C, for example 750 to 900°C, for example 780 to 850°C, or for example 800 to 830°C. Moreover, the pyrolysis may be carried out in an atmosphere of pressurized gas. The reaction pressure may be adjusted in the range of, for example, 0.1 to 10 bar, for example 0.5 to 5 bar, for example 1 to 2 bar, or for example 1.3 to 1.8 bar.

Also, the residence time of the solid (for example, iron oxide-containing catalyst) in the reactor may be adjusted in the range of, for example, 1 to 150 hours, for example 10 to 120 hours, or for example 15 to 100 hours.

Carbon dioxide ($CO_2$) is not generated in a mechanism of auto-thermal reduction reaction of methane (Scheme 2 below), but a trace amount of carbon dioxide (or carbon dioxide and water) may be generated as a byproduct during the actual pyrolysis (in which iron oxide ($Fe_2O_3$) is reduced to a metallic form thereof while forming carbon oxide). This

side reaction may be remarkable when using an inexpensive iron oxide-containing catalyst, namely an iron ore catalyst. As a result, an induction section (a section until the peak conversion is reached) may be formed during the pyrolysis reaction involving the auto-thermal reduction of methane.

[Scheme 2]

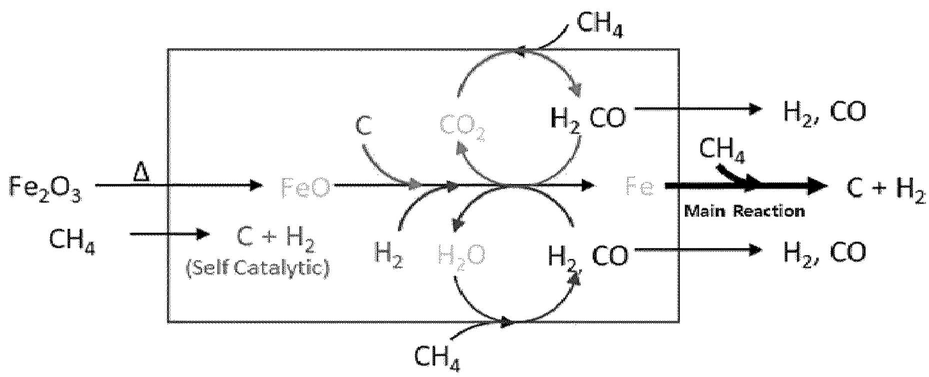


The conversion of methane in the pyrolysis reaction may be adjusted in the range of, for example, at least 15%, for example 20 to 95%, or for example 40 to 93%. The conversion may also be adjusted in the range of, for example 60 to 92%, for example 70 to 90%, or for example 80 to 85%. Here, the conversion of methane may be increased to a certain level or more by operation at an elevated reaction temperature, but the amount of hydrogen produced may be decreased due to heat loss caused by high-temperature operation, increased catalyst deactivation, etc. Hence, it may be advantageous to control the conversion of methane in consideration of the desired amounts of hydrogen and carbon produced and the amount of hydrogen produced per active metal in the catalyst.

Also, respective selectivity vales of hydrogen and carbon monoxide in the gas products (e.g. based on a conversion of methane of 90%) may be, for example, at least 1% (for example at least 1.5%, for example at least 2%), and at least 1% (for example at least 1.5%, for example 2 to 5%).

According to a particular embodiment, when red mud is used as a pyrolysis catalyst, the selectivity of carbon monoxide in the gas products (e.g., based on a conversion of methane of 60%) may be, for example, at least 1%, for example at least 1.1%, or for example 1.2 to 2%. In this case, when hydrogen and carbon monoxide are generated by the auto-thermal reduction during the pyrolysis, the selectivity of carbon monoxide in the gas products (e.g., based on a conversion of methane of 90%) may be, for example, at least 1.3%, at least 1.5%, or 1.6 to 3%.

However, it is to be understood that the above numerical ranges are described for illustrative purposes.

Referring back to FIG. 1, as iron oxide ($Fe_2O_3$) in the catalyst is reduced by methane in the rotary kiln-type reactor A, , a gas mixture containing unreacted methane as well as hydrogen and carbon monoxide, and solid carbon may be produced. Here, the solid carbon may be graphitic carbon. Graphite has a layered structure, where plate-shaped twodimensional graphene, in which carbon atoms are linked in a hexagonal shape, is stacked. The graphitic carbon produced in the present embodiment may be composed of, for example, 15 to 30 layers of graphene, for example 18 to 25 layers of graphene. The carbon thus produced may be combined with catalyst particles to form an iron (Fe)-containing carbon-based solid (C/Fe).

Notably, the carbon produced by pyrolysis is attached to the catalyst particles, resulting in a solid, the weight of which is increased by at least 3 times, for example 4 to 10 times, for example 5 to 9 times compared to the amount of iron that is an active metal in the iron-based catalyst introduced at the beginning of the reaction.

Also, as the reaction progresses in the rotary kiln-type reactor as described above, the amount of carbon attached to the catalyst particles may increase, thus increasing the angle of repose compared to the initial iron-based particles.

As an example, the apparent density of the iron oxide-containing catalyst in the form of solid particles introduced into the reactor A may be, for example, 0.7 to 2.8 g/cm$^3$, for example 0.8 to 2.5 g/cm$^3$, for example 0.9 to 2.25 g/cm$^3$, for example 1 to 2 g/cm$^3$, for example 1.1 to 1.8 g/cm$^3$, or for example 1.2 to 1.5 g/cm$^3$, whereas the apparent density of the iron (Fe)-containing carbon-based solid discharged from the reactor A may be, for example, 0.05 to 1.5 g/cm$^3$, for example 0.1 to 0.7 g/cm$^3$, for example 0.12 to 0.4 g/cm$^3$, or for example 0.15 to 0.2 g/cm$^3$. Apparent density can be determined, for example, according to DIN/ISO 697.

The reason why unreacted methane is contained in the gas products in the present embodiment is that a thermodynamic equilibrium of methane, hydrogen, carbon monoxide, and carbon is formed during the pyrolysis with an increase in the internal temperature of the reactor and thus the conversion of methane does not rise any more.

In the illustrated embodiment, the gas mixture and the iron (Fe)-containing carbon-based solid (C/Fe) may be separated from each other using a gas-solid separator B known in the art via line 4, and examples of the separator may include a cyclone, a hydrocyclone, a gravity settling device, a spray scrubber, a venturi scrubber, a bag filter, a pocket filter, and an electrostatic precipitator. By gas-solid separation, the gas mixture containing hydrogen, carbon monoxide, and methane may be transferred through line 5 and the iron (Fe)-containing carbon-based solid may be separated and recovered through line 11. As an example, a high-purity carbon-based material may be obtained by removing iron from the iron-containing carbon-based solid using a refining technique known in the art, and a detailed description thereof will be omitted.

According to an embodiment, the molar ratio of hydrogen ($H_2$)/carbon monoxide (CO) in the gas mixture (e.g. based on a methane conversion of 50 to 90%) may be adjusted in the range of, for example, 20 to 70, for example 30 to 65, for example 35 to 60, or for example 40 to 55, and may be 55 in a specific embodiment.

Also, the molar ratio of hydrogen ($H_2$)/methane ($CH_4$) in the gas mixture (e.g. based on a methane conversion of 50 to 90%) may be adjusted in the range of, for example, 1 to 60, for example 2 to 55, for example 3 to 50, for example 5 to 45, or for example 10 to 20. Specifically, based on the methane conversion of 90%, the molar ratio thereof may be adjusted in the range of 10 to 60, for example 13 to 50, for example 16 to 40, or for example 23 to 30. Based on the methane conversion of 70%, the molar ratio thereof may be adjusted in the range of 3 to 10, for example 4 to 8, for example 5 to 6. Based on the methane conversion of 60%, the molar ratio thereof may be adjusted to range from 1 to 10, for example 2 to 7, or for example 3 to 5. Based on the methane conversion of 50%, the molar ratio thereof may be adjusted in the range of 1 to 4, for example 1.5 to 3, or for example 2 to 3. In a specific embodiment, the molar ratio of hydrogen ($H_2$)/methane ($CH_4$) in the gas mixture may be 26. In another specific embodiment, the molar ratio of hydrogen ($H_2$)/methane ($CH_4$) in the gas mixture may be 3 (based on the methane conversion of 60%).

For the iron (Fe)-containing carbon-based solid, the molar ratio of carbon (C)/iron (Fe) (e.g., based on a methane conversion of 50 to 90%) may be adjusted in the range of, for example, 25 to 60, for example 30 to 50, for example 35 to 45, and may be 42 in a specific embodiment.

As described above, the gas mixture separated using the gas-solid separator B may be transferred to a process gas compressor C and pressurized. Here, the reason why pressurization is performed is due to a downstream adsorption process. As an example, the increased pressure may be determined considering a difference in adsorption capacity depending on the pressure of the adsorbent. For example, in a 4-tower pressure swing adsorption (PSA) process, the adsorption pressure to achieve a hydrogen recovery of 85 to 90% may fall in the range of at least 10 bar, for example 12 to 25 bar, or for example 15 to 20 bar.

With reference to FIG. 1, the pressurized gas mixture may be separated into hydrogen, carbon monoxide, and methane via line 6 using a gas separation technique known in the art. Examples of the gas separation technique may include pressure swing adsorption (PSA), vacuum swing adsorption (VSA), and membrane separation. In the illustrated embodiment, the pressurized gas mixture may be transferred to a PSA unit D, in which the PSA unit may be filled or packed with an adsorbent corresponding to the type of gas to be separated. Here, PSA, as is known in the art, may be a technique for separating gases using adsorption capacity varying depending on a difference in pressure and adsorption characteristics of solid adsorbents to gaseous materials.

In this regard, the PSA unit may be typically filled with an adsorbent corresponding to the molecular size and adsorption strength of the gas component. Here, the pore size of the adsorbent capable of selectively adsorbing each of carbon monoxide and methane may fall in the range of 4 to 5 Å. However, hydrogen with the lowest adsorption strength may be separated in such a manner that it is discharged without being adsorbed.

Typically, (i) molecular sieves (e.g. 4A zeolite, 5A zeolite) for nitrogen, carbon monoxide, and methane, (ii) activated carbon for methane, C2 and C3 hydrocarbons, and carbon dioxide, (iii) silica gel for C3 or higher hydrocarbons, and (iv) activated alumina for aromatics, $H_2S$, $H_2O$, HCl, etc., may be used (adsorption strength increases in the order from (i) to (iv)). However, in the present embodiment, since the gas mixture generated by pyrolysis mainly contains hydrogen, carbon monoxide, and methane, three gas components may be separated from each other only using a molecular sieve and activated carbon. Briefly, hydrogen, carbon monoxide, and methane are produced as pyrolysis products, and thus the number of adsorbents required for gas separation may be decreased.

The types of adsorbents and principles of adsorption and desorption for separating hydrogen, carbon monoxide, and methane are known in the art, and a description thereof will be omitted. According to an embodiment, however, desorption operation conditions may be set depending on target recovery of hydrogen, carbon monoxide, and methane. In this regard, the recovery may increase with a decrease in desorption pressure, and the purity of the separated gas may decrease with an increase in the recovery. Considering this correlation, the desorption operation pressure to achieve a hydrogen recovery rate of 85 to 90% may be set to 1 to 1.5 bar.

As described above, through the gas mixture separation process, methane, hydrogen, and carbon monoxide are discharged through respective lines 7, 8 and 9. As such, hydrogen and carbon monoxide may be recovered as target products. On the other hand, methane may be recycled through a splitter E and may be combined with a fresh methane-containing feedstock via line 10.

According to an embodiment of the present invention, the configuration of the rotary kiln reactor applicable to the reaction involving methane auto-thermal reduction is schematically shown in FIG. 2.

With reference to the drawing, as described above, the gaseous methane-containing feedstock is introduced into a rotary kiln reactor 200 via line 201, after which an iron oxide-containing catalyst is supplied in a controlled amount by valve operation from a catalyst storage device (e.g. a hopper 202), combined with the methane-containing feedstock, and then introduced together into a tube 204 in the rotary kiln reactor. The tube 204 provides a space for pyrolysis (including auto-thermal reduction of methane) to occur while accommodating solid particles (i.e., iron oxide-containing catalyst) and gas (i.e. methane-containing feedstock). The material of the tube 204 may be at least one selected from among, for example, alumina, SiC, FeCrAl alloy, Inconel (NiCr), and heat-resistant stainless steel.

In the illustrated embodiment, the tube 204 is configured such that buffer tubes (specifically an inlet buffer tube 204' and an outlet buffer tube 204") are connected or linked to both sides of a central work tube. Here, the work tube may indicate an area of the tube in which pyrolysis occurs by receiving heat necessary for the reaction in the inner space of the tube 204. As an example, a heater 205 may be provided outside the tube 204 along the length of the work tube. Hereinafter, for consistency of description, "tube" refers to the work tube in which the reaction takes place.

According to an embodiment, the ratio of the length of the tube 204 to the inner diameter of the tube 204 (L/D) may be determined in consideration of the residence time of the iron-based catalyst, and may be set in the range of, for example, 5 to 50, for example 10 to 30, for example 15 to 20, which is understood exemplarily.

As the heater 205, any heater known in the art may be used, so long as it is able to supply heat sufficient for pyrolysis into the work tube, specifically formation of free methyl radicals as an activated form of methane and reduction of iron oxide in the catalyst. This heater may be provided outside and/or inside the tube 204. Examples of the heater 205 may include a heat exchanger, a heating coil, and a combustion heater, which may be used alone or in combination. In the illustrated example, the heater 205 may be provided in a way to surround at least a portion of the outside of the tube 204, whereby heat may be transferred to the inner space through the wall of the tube 204.

Also, a housing 206 is configured to surround at least the work tube, making it possible to minimize external influence on the reaction conditions in the tube in which pyrolysis occurs.

In order to rotate the tube 204 in the rotary kiln reactor 200, a rotator 207, for example, a motor may be provided at any position. In FIG. 2, an inlet for the methane-containing feedstock and the solid particle catalyst may be provided at one end of the tube 204, and a motor may be provided at the remaining end (opposite end). Moreover, rotational force may be supplied to the tube 204 via a power transmission member mechanically connected or engaged with the motor, for example, a gear, belt, or chain. Illustratively, it may be advantageous to consider the effect of the supply speed of the solid catalyst particles on the rotational speed of the tube 204 during pyrolysis (the methane conversion may decrease with a decrease in the supply speed of the solid catalyst particles, and transfer of the solid catalyst particles may become difficult with a decrease in the rotational speed of the tube 204).

Illustratively, the average hydrogen production depending on the supply speed of the solid particle catalyst and the rotational speed of the rotary kiln (or tube) under the constant temperature and pressure conditions (820 °C, 1.4 bar) may vary as shown in Table 2 below.

[Table 2]

| Classification | Supply speed of catalyst (cc/hr) | Rotational speed of work tube (RPM) | Average hydrogen production (SLM) |
|---|---|---|---|
| 1 | 37.5 | 0.09 | 1.1 |
| 2 | 43.8 | 0.09 | 1.7 |
| 3 | 46.9 | 0.11 | 1.1 |
| 4 | 46.9 | 0.13 | 1.2 |
| 5 | 46.9 | 0.20 | 1.7 |
| 6 | 46.9 | 0.22 | 2.7 |

Considering this tendency, the rotational speed of the tube 204 may be adjusted within a range that is able to increase the average hydrogen production, for example, 0.05 to 5 rpm, for example 0.1 to 3 rpm, for example 0.12 to 2 rpm, for example 0.2 to 1 rpm.

According to an embodiment, due to co-current transfer of the solid iron oxide-containing catalyst particles and the methane-containing feedstock (gas), a pretreatment section and a reaction section may be separately provided in the tube 204. In the pretreatment section, the catalyst particles may be activated using methane, and the extent of activation may vary depending on the temperature. For example, when iron oxide-containing catalyst particles are

activated at a relatively low temperature (which may be adjusted in the range of 600 to 800°C, for example 700 to 780°C, for example 725 to 750°C), the amount (weight) of carbon produced per weight of iron that is an active metal may increase. As an example, in the pretreatment process, methane and catalyst particles may be introduced in a co-current manner into the tube 204, and the auto-thermal reduction route may be promoted under temperature conditions adjusted as described above, whereby the iron oxide-containing catalyst may be activated to form carbon monoxide and metallic Fe.

The rotary kiln reactor may be inclined at a predetermined angle in the direction of movement of the solid particles in order to control the residence time of the solid particles. Here, the inclination angle (slope) may be adjusted in the range of 0.01 to 10°, for example 0.02 to 5°, for example 0.05 to 2° on a horizontal basis. The inclination angle may be properly adjusted within the above range in consideration of the fact that the residence time of the solid catalyst particles decreases with an increase in the inclination of the kiln.

In the illustrated embodiment, gas and solid products produced by pyrolysis (involving auto-thermal reduction of methane) in the tube 204 of the rotary kiln reactor are discharged from the tube 204, and as mentioned in conjunction with FIG. 1, the gas mixture and the solid are separated from each other using a gas-solid separator 208. Here, the separated gas mixture may be recycled through line 203 and combined with fresh feedstock. On the other hand, the separated solid may be collected by a solid collector 209 or subjected to post-processing (e.g. purification) so as to be applied to other end uses.

According to an embodiment of the present invention, the efficiency of pyrolysis may be improved by introducing a screw and lifter combination into a tube of a rotary kiln-type reactor.

In this regard, the rotary kiln is generally known to be of a screw type (a type in which a screw shaft is inserted into a tube), or an auger type. Among them, a screw-type rotary kiln is applied to transfer of solid with no change in volume (e.g., polymers, etc.), and a screw structure formed on a rotating shaft provided at the center of the tube allows the solid in the tube to move forward by action of a helix flight formed on the shaft according to the rotation of the shaft. However, when carbon generated by pyrolysis of methane occupies a much larger volume than the initially introduced catalyst particles as in the present embodiment, uniform contact between the gaseous reactant and the catalyst particles may be prevented and it may be difficult to carry out the reaction at a desired reaction temperature. In particular, as described above, it is preferable to fill the tube of the rotary kiln with a large volume of solid by the increased angle of repose, but when a screw shaft is present, it may be difficult to increase or control the residence time with an increase in the angle of repose. On the other hand, an auger-type rotary kiln is very suitable for reaction during which the volume of solid decreases, for example, reaction in which biomass is gradually pyrolyzed, but is not suitable for methane pyrolysis in which the volume of solid increases due to the generation of carbon during the reaction.

Taking into consideration the foregoing, in the present embodiment, unlike the conventional rotary kiln reactors, such as a screw-type rotary kiln reactor, a helix baffle is formed to extend along the inner circumferential surface of the tube so that solid particles (or solid) introduced into the tube are transferred. Therefore, the helix baffle formed on the inner circumferential surface of the tube rotates according to rotation of the tube, instead of having a screw shaft, unlike the conventionally known screw-type rotary kiln, thereby inducing forward movement of the solid.

In this regard, FIG. 3 is a side view, a plan view, and a front view showing a combination of a helix baffle and lifters in the tube of the rotary kiln reactor usable in the present embodiment.

In the illustrated embodiment, the height $h_1$ of the helix baffle may affect the size of the moving space of the solid in the center of the tube (i.e., the cavity size inside the tube), and may be adjusted in the range of, for example, 1/10 to 1/2, for example 3/20 to 8/20, for example 1/5 to 3/10 of the inner diameter (diameter) of the tube. Also, the pitch P of the helix baffle may be adjusted in the range of, for example, 1/60 to 1/6, for example 1/30 to 2/15, for example 1/20 to 1/10 of the tube length. However, these dimensional ranges may be understood for illustrative purpose only, and thus may be changed in a scale-up process.

Further, the helix baffle has a helix angle, and this helix angle may be determined depending upon the residence time of the solid catalyst. As an example, the helix angle of the helix baffle may be adjusted in the range of, for example, 30 to 60°, for example 35 to 55°, for example 40 to 50°.

With reference to the drawing, at least one lifter is provided on the inner circumferential surface of the tube (corresponding to at least one among pitches P of the helix baffle formed in the tube). Typically, lifters may be provided at respective pitches of the helix baffle in the tube, but in some cases, no lifters may be provided in areas corresponding to some pitches, or lifters having different shapes may be provided.

In the illustrated embodiment, one lifter is provided per pitch of the helix baffle, and is formed at an angle of 90° with respect to the lifter provided at an adjacent pitch when viewed from the front (lifters 1 to 4 in FIG. 3). This arrangement may be understood for illustrative purpose only, and in the present embodiment, the angle between the lifters may be properly adjusted in the range of, for example, 30 to 360°, for example 50 to 180°, or for example 60 to 120°.

In the illustrated embodiment, the height $h_2$ of the lifter may be determined in consideration of the height $h_1$ of the helix baffle, and may be adjusted in the range of, for example, 1/10 to 1/2, for example 3/20 to 8/20, or for example 1/5 to 3/10 of the inner diameter (diameter) of the tube. The thickness of the lifter may fall in the range of, for example, 1/20 to 1/2, for example 1/10 to 2/5, or for example 3/20 to 3/10 of the height $h_2$ of the lifter. In addition, according to an

embodiment, the ratio of the height $h_2$ of the lifter to the height $h_1$ of the helix baffle may be adjusted in the range of, for example, 0.25 to 2, for example 0.5 to 1.5, or for example 0.75 to 1.25.

In this regard, a change in the pyrolysis product (partial pressure) due to movement of the catalyst particles in the tube of the rotary kiln reactor with the combination of the helix baffle and the lifters and the process of dividing the catalyst particles by the lifters are schematically shown in FIG. 4.

With reference to the drawing, when the catalyst particles move along a helical surface in the rotating tube and contact (or collide) with the lifters, they move while being divided into spaces in front of and behind the pitch where each lifter is provided (i.e., residence time of the catalyst particles may be increased because the catalyst particles are dispersed during movement in the tube). In this way, by combining the lifters and the helix baffle formed on the inner circumferential surface of the tube in the rotary kiln reactor, the residence time of the solid, particularly the solid particle catalyst, in the reactor may be controlled. As such, the combination of the helix baffle and the lifters enables uniform contact between the gaseous methane-containing feedstock and the catalyst over a controlled period of time, thereby maximizing production of target products, such as hydrogen, carbon monoxide, and carbon. Moreover, the amount of the solid catalyst particles that move forward may be adjusted simply by changing the internal structure and dimensions of the tube, such as the number, shape, dimensions, and arrangement of lifters and the height and pitch of the helix baffle.

A modification in which a plurality of lifters (particularly, four lifters) per pitch of the helix baffle is provided at a predetermined angle to each other is shown in FIG. 5.

With reference to the drawing, a plurality of lifters is provided per pitch, and in the illustrated embodiment, four lifters are provided per pitch, which may be understood for illustrative purpose only. As an example, lifters of up to 12, for example 2 to 10, for example 3 to 6 may be provided per pitch. As other details have been described with regard to FIG. 3, a redundant description thereof will be omitted.

When the helix baffle and the lifters are combined in this way, disadvantages when separately installing the helix baffle and the lifters may be effectively alleviated (when installing only the helix baffle, it may be advantageous to transfer the solid catalyst particles in the rotary kiln, but efficient contact between the catalyst and the gaseous feedstock may be difficult, and when installing only the lifters, contact between the catalyst and the gaseous feedstock may be improved, but it may be difficult to transfer the catalyst at a constant amount or speed).

Various examples of the shapes of the lifters provided in the tube of the rotary kiln reactor are shown in FIGs. 6A to 6C.

Specifically, FIG. 6A shows a straight lifter, and FIGs. 6B and 6C show bent lifters. In FIG. 6B, since the lifter has a shape bent in an oblique line, the function of increasing the lifting amount (volume) of the catalyst and the lifting height of the catalyst may be enhanced due to the increased volume of the lifter. Also, in FIG. 6C, the lifter has a shape bent at an angle of 90° (or a rectangular lifter), and as such, an increase in the lifting height of the catalyst is more remarkable.

A better understanding of the present invention may be obtained through the following examples.

**Examples**

Throughout Examples and Comparative Examples, high-purity methane (99.97%) or natural gas simulated composition was used as a methane-containing gas. The compositions thereof are shown in Table 3 below.

[Table 3]

| Gas component | mol% |
|---|---|
| $CH_4$ | 91.96 |
| $C_2H_6$ | 6.54 |
| $C_3H_8$ | 1.00 |
| $IC_4$ | 0.20 |
| $NC_4$ | 0.20 |
| $N_2$ | 0.10 |

**Examples 1 to 3 and Comparative Examples 1 and 2**

Iron ore particles (apparent density: 2.24 g/cm$^3$; average particle size: 106 to 180 μm) were used as a catalyst.

Pyrolysis of methane was carried out using a selfmanufactured system as a rotary kiln reactor based on FIG.

2. The material of the tube in the rotary kiln reactor was Inconel 601, and a heater made of FeCrAl alloy (Kanthal A1) was provided to the outer surface of the tube to supply heat necessary for pyrolysis. Each of a helix baffle and lifters provided to the tube in the rotary kiln reactor was made of Inconel 601. In addition, a catalyst storage device, a feeder connected to the catalyst storage device, a discharge buffer tube, and a carbon storage device connected to the discharge buffer tube were provided, and the catalyst storage device and the carbon storage device were designed not to be affected by the internal pressure of the reactor for continuous operation.

**Example 1**

The conditions of methane pyrolysis performed in the rotary kiln reactor were set as shown in Table 4 below.

[Table 4]

| Classification | Pyrolysis conditions |
|---|---|
| Reaction temperature | 820°C |
| Reaction pressure | 1.4 bar |
| Flow rate of methane in gaseous feedstock | 1.5 slm |
| Supply speed of catalyst | 46.9 cc/hr |
| Rotational speed of kiln (tube) | 0.2 rpm |
| Inclination angle of kiln | 1° |

The methane conversion as a function of the pyrolysis time (TOS, time on stream) was measured, and the results thereof are shown in FIG. 7.

Referring to the drawing, the maximum conversion of methane was determined to be 92% at the set reaction temperature and reaction pressure under the condition that the catalyst and methane were continuously injected. As such, no water was generated.

Example 2

The conditions of methane pyrolysis performed in the rotary kiln reactor were set as shown in Table 5 below.

[Table 5]

| Classification | Pyrolysis conditions |
|---|---|
| Reaction temperature | 820°C |
| Reaction pressure | 1.4 bar |
| Flow rate of methane in gaseous feedstock | 3 slm |
| Supply speed of catalyst | 59.5 cc/hr |
| Rotational speed of kiln (tube) | 0.13 rpm |
| Inclination angle of kiln | 0.5° |

The methane conversion as a function of time (TOS, time on stream) was measured, and the results thereof are shown in FIG. 8. Compared to Example 1, in Example 2, both the flow rate of methane and the supply speed of the catalyst increased, and the rotational speed of the rotary kiln was lowered, thereby achieving a maximum methane conversion of 89%.

**Comparative Example 1**

The conditions of methane pyrolysis performed in the rotary kiln reactor were set as shown in Table 6 below.

[Table 6]

| Classification | Pyrolysis conditions |
|---|---|
| Reaction temperature | 820°C |
| Reaction pressure | 1.4 bar |
| Flow rate of methane in gaseous feedstock | 2 slm |
| Supply speed of catalyst | 43.8 cc/hr |
| Rotational speed of kiln (tube) | 0.11 rpm |
| Inclination angle of kiln | 0° |

The methane conversion as a function of time (TOS, time on stream) was measured, and the results thereof are shown in FIG. 9.

Referring to the drawing, the methane flow rate and the catalyst supply speed of Comparative Example 1 were set similarly to those of Example 1, but the rotational speed of the rotary kiln was low and the inclination angle of the kiln was not applied. Consequently, the maximum conversion of methane was 35%. This is supposed to be because contact between the solid catalyst and the gaseous feedstock is not efficient due to the low rotational speed of the kiln, and moreover because forward movement of the solid catalyst particles is not efficient due to the absence of the inclination angle of the kiln.

**Comparative Example 2**

The conditions of methane pyrolysis performed in the rotary kiln reactor were set as shown in Table 7 below.

[Table 7]

| Classification | Pyrolysis conditions |
|---|---|
| Reaction temperature | 800°C |
| Reaction pressure | 1.2 bar |
| Flow rate of methane in gaseous feedstock | 1 slm |
| Supply speed of catalyst | 37.5 cc/hr |
| Rotational speed of kiln (tube) | 0.09 rpm |
| Inclination angle of kiln | 0° |

The methane conversion as a function of time (TOS, time on stream) was measured, and the results thereof are shown in FIG. 10.

Referring to the drawing, the maximum average conversion of methane was determined to be 91%. Compared to Example 1, the reaction temperature and reaction pressure were relatively low, and the flow rate of methane and the supply speed of the catalyst were similar. Also, similarly to Comparative Example 1, the rotational speed of the kiln was low and the inclination angle of the kiln was not applied. Here, the methane conversion is determined to increase because the residence time of methane in the kiln is lengthened due to the low methane flow rate compared to Example 1.

Nevertheless, in view of productivity, the low methane flow rate and reaction pressure were applied and the methane conversion was similar to that of Example 2, but productivity was confirmed to be 3.5 times lower. Therefore, when the supply speed of the solid catalyst and the flow rate of methane as a reactant are increased proportionally and the rotational speed of the kiln and the inclination angle of the kiln are adjusted to remove an appropriate amount of carbon generated in the kiln, it is determined that hydrogen and carbon as a semi-finished product can be continuously produced from the methane-containing feedstock.

**Example 3**

When using the rotary kiln reactor of Example 1 or 2 and based on the conversion of 90% during pyrolysis, compositions of individual streams in the entire method shown in FIG. 1 are shown in Table 8 below (unit: ton), and also, the hydrogen yield with TOS (time on stream) is shown in FIG. 11.

[Table 8]

| Stream | Composition |
|---|---|
| Feedstock | $CH_4$: 14.9 |
| 1 | $CH_4$: 16 |
| 2 | $CH_4$: 16, iron ore: 1.72 |
| 3 | Iron ore: 1.72 |
| 4 | $CH_4$: 16, iron ore: 1.72 |
| 5 | $H_2/CH_4/CO$: 3.6/1.1/0.91 |
| 6 | $H_2/CH_4/CO$: 3.6/1.1/0.91 |
| 7 | $CH_4$: 1.1 |
| 8 | $H_2$: 3.6 |
| 9 | CO: 0.91 |
| 10 | $CH_4$: 1.1 |
| 11 | C/Fe: 10.8/1.2 |

The results of the table above were obtained by performing the method in a continuous mode using methane as the feedstock and iron ore as the catalyst on a hydrogen production scale of 1 ton per year. The above table shows the mass flow of hydrogen, carbon monoxide, and carbon produced according to the process flow when hydrogen is produced at a methane conversion of 90% in the presence of the catalyst.

**Examples 4 to 6 and Comparative Examples 3 and 4**

Red mud particles having an apparent density of 1.04 g/$cm^3$ and an average particle size of about 106 to 300 μm were used as a catalyst. X-ray diffraction (XRD) analysis was performed on red mud, and also, the comparison results with iron ore (apparent density: 2.24 g/$cm^3$; average particle size: about 106 um to 180 μm) are shown in FIG. 12. Referring to the drawing, for red mud, in addition to the characteristic peak corresponding to iron oxide, characteristic peaks corresponding to AlOOH, $TiO_2$, and $SiO_2$ were observed, indicating that aluminum (Al), silicon (Si), titanium (Ti), etc. are additionally contained.

**Example 4**

Pyrolysis of methane was carried out using a vertical reactor (volume: 56.4 cc; material: SUS316) under conditions shown in Table 9 below, and the amount of each of red mud (6 g) and iron ore (2.5 g) was adjusted so that the same amount of iron oxide was contained in the catalyst. During pyrolysis using the two catalysts, a methane conversion and hydrogen yield were measured, and the results thereof are shown in Table 9 below and FIG. 13.

[Table 9]

| Catalyst | Catalyst loading (g) | Temperature (°C) | $CH_4$ flow (ccm) | $gH_2/gFe$ |
|---|---|---|---|---|
| Iron ore | 2.5 | 815 | 10 | 2.48 |
| Red mud | 6 | 815 | 10 | 2.81 |

Referring to the drawing, pyrolysis in the presence of the red mud catalyst showed a methane conversion with time similar to that when using the iron ore catalyst, which means that, even when red mud is used as the catalyst, the methane conversion is similar under the condition that the amount of iron, an active metal, is the same as in iron ore.

**Example 5**

Pyrolysis was carried out using red mud as a catalyst in the same rotary kiln reactor as in Example 1.

The conditions of methane pyrolysis carried out in the rotary kiln reactor were set as shown in Table 10 below.

[Table 10]

| Classification | Pyrolysis conditions |
|---|---|
| Reaction temperature | 820°C |
| Reaction pressure | 1.4 bar |
| Flow rate of methane in gaseous feedstock | 1.5 slm |
| Supply speed of catalyst | 30 cc/hr |
| Rotational speed of kiln (tube) | 0.5 rpm |
| Inclination angle of kiln | 1° |

The methane conversion as a function of time (TOS, time on stream) was measured, and the results thereof are shown in FIG. 14.

Referring to the drawing, the methane conversion was almost maintained at about 27.7% until about 5 hours at the set reaction temperature and reaction pressure under the condition that the catalyst and methane were continuously injected and at the supply speed of catalyst changed from 20 cc/hr to 30 cc/hr. However, after the catalyst reached the inside of the reactor and was uniformly injected, the maximum conversion of methane rapidly increased to 69.3% and was then maintained at about 60% or more.

**Comparative Example 3**

The conditions of methane pyrolysis carried out in the rotary kiln reactor were set as shown in Table 11 below.

[Table 11]

| Classification | Pyrolysis conditions |
|---|---|
| Reaction temperature | 820°C |
| Reaction pressure | 1.4 bar |
| Flow rate of methane in gaseous feedstock | 2.0 slm |
| Supply speed of catalyst | 20 cc/hr |
| Rotational speed of kiln (tube) | 0.5 rpm |
| Inclination angle of kiln | 1° |

The methane conversion as a function of time (TOS, time on stream) was measured, and the results thereof are shown in FIG. 15.

Referring to the drawing, the pyrolysis conditions in Comparative Example 3 were set differently from those of Example 5 in that the flow rate of methane in gaseous feedstock was 2.0 slm, which was 0.5 slm higher than that of Example 5, and the supply speed of the catalyst was 20 cc/hr, which was 10 cc/hr lower than that of Example 5. As a result, the maximum conversion of methane was 13.9%, and no improvement over time was observed. This is supposed to be because the amount of methane converted is small due to high flow rate of methane supplied compared to the amount of catalyst injected.

**Comparative Example 4**

Pyrolysis of methane was carried out in the same manner as in Example 5, with the exception that the conditions of methane pyrolysis in the rotary kiln reactor were set as shown in Table 12 below.

[Table 12]

| Classification | Pyrolysis conditions |
|---|---|
| Reaction temperature | 820°C |
| Reaction pressure | 1.4 bar |
| Flow rate of methane in gaseous feedstock | 2.0 slm |
| Supply speed of catalyst | 30 cc/hr |
| Rotational speed of kiln (tube) | 0.5 rpm |
| Inclination angle of kiln | 1° |

The methane conversion as a function of time (TOS, time on stream) was measured, and the results thereof are shown in FIG. 16.

Referring to the drawing, the pyrolysis conditions in Comparative Example 4 were set differently from those of Example 5 in that the flow rate of methane in gaseous feedstock was 2.0 slm, which was 0.5 slm higher than that of Example 5. As a result, the maximum conversion of methane was 27.7%, and no improvement over time was observed. This is supposed to be because the amount of methane converted is small despite an increase in the amount of the catalyst injected due to high flow rate of methane supplied compared to the amount of catalyst injected as in Comparative Example 3.

**Example 6**

When using the rotary kiln reactor of Example 5 and based on the conversion of 60% during pyrolysis, compositions of individual streams in the entire process shown in FIG. 1 are shown in Table 13 below (unit: ton).

[Table 13]

| Stream | Composition |
|---|---|
| Feedstock | $CH_4$: 9.96 |
| 1 | $CH_4$: 16.6 |
| 2 | $CH_4$: 16.6, red mud: 3.06 |
| 3 | Red mud: 3.06 |
| 4 | $H_2$/$CH_4$/CO/ carbon (C) in solid/iron (Fe) in red mud/material other than $Fe_2O_3$ in red mud: 2.49/6.64/0.60/7.21/0.80/1.92 |
| 5 | $H_2$/$CH_4$/CO: 2.49/6.64/0.60 |
| 6 | $H_2$/$CH_4$/CO: 2.49/6.64/0.60 |
| 7 | $CH_4$: 6.64 |
| 8 | $H_2$: 2.49 |
| 9 | CO: 0.60 |
| 10 | $CH_4$: 6.64 |
| 11 | Carbon (C) in solid/iron (Fe) in red mud/material other than $Fe_2O_3$ in red mud: 7.21/0.80/1.92 |

The results of the table above were obtained by performing the process in a continuous mode using methane as the feedstock and iron ore as the catalyst on a hydrogen production scale of 1 ton per year. The above table shows the mass flow of hydrogen, carbon monoxide, and carbon produced according to the process flow when hydrogen is produced at a methane conversion of 60% in the presence of the catalyst.

Consequently, oxygen present in iron ore or red mud was converted into carbon monoxide and removed, and activated iron reacted with methane and thus carbon was precipitated, removing the active metal iron and carbon as solids, while gaseous hydrogen, carbon monoxide, and unreacted methane were easily separated through a downstream

separation process.

As is apparent from the above description, a method according to the present invention is capable of producing gas products comprising hydrogen and carbon monoxide, and solid products comprising carbon-based material (or carbon) by subjecting a gaseous methane-containing feedstock to pyrolysis (involving auto-thermal reduction of methane) in a rotary kiln-type reactor in the presence of an iron oxide-containing solid particle catalyst. In addition, the use of the rotary kiln-type reactor configured to easily control the residence time of the iron oxide-containing solid particle catalyst in the reactor and bring the catalyst into uniform contact with the gaseous methane-containing feedstock enables efficient operation not only in a batch mode but also in a continuous mode. In particular, since hydrogen yield is high in view of the nature of the reaction, it is advantageous for commercial production of hydrogen, which has recently been rapidly increasing in demand, and also, it is possible to produce carbon monoxide that can be used for various purposes, rather than greenhouse gases such as carbon dioxide.

Furthermore, carbon produced according to the present embodiment has properties suitable for electrodes of various energy storage devices such as lithium secondary batteries, especially anodic materials, advantageously preparing high value-added carbon materials, as well.

It should be understood that modifications and variations of the present disclosure may be made by those skilled in the art, and such modifications or variations should fall within the scope of the present disclosure.

## Claims

**1.** A rotary kiln-type reactor comprising:

a tube configured to accommodate solid particles and gas and to be rotatable;
a heater configured to supply controlled heat to an inner space of the tube;
a helix baffle configured to extend along an inner circumferential surface of the tube to induce the accommodated solid particles to move forward in a longitudinal direction of the tube according to rotation of the tube; and
at least one lifter provided on the inner circumferential surface of the tube to disperse the accommodated solid particles in the tube.

**2.** The reactor of claim 1, wherein the solid particles are iron oxide-containing catalysts, and the gas is a methane-containing feedstock.

**3.** The reactor of claim 1 or 2, wherein the iron oxide-containing catalysts are supplied from a catalyst storage device, and introduced together with the methane-containing feedstock into the tube.

**4.** The reactor of any preceding claim, wherein the tube is made of at least one selected from the group consisting of alumina, SiC, FeCrAl alloy, Inconel (NiCr), and heat-resistant stainless steel.

**5.** The reactor of any preceding claim, wherein the rotary kiln-type reactor is configured to introduce the methane-containing feedstock and the iron oxide-containing catalysts into the tube in a co-current flow manner.

**6.** The reactor of any preceding claim, wherein the tube is configured such that an inner buffer tube and an outlet buffer tube, respectively, are connected or linked to both sides of a central work tube.

**7.** The reactor of any preceding claim, wherein lifters up to 12 are provided per pitch of the helix baffle.

**8.** The reactor of any preceding claim, wherein the at least one lifter has at least one of a straight shape or a bent shape.

**9.** The reactor of any preceding claim, wherein a pitch length of the helix baffle ranges from 1/60 to 1/6 of a length of the tube.

**10.** The reactor of any preceding claim, wherein a height of the helix baffle is adjusted to range from 1/10 to 1/2 of an inner diameter of the tube, and a height of the lifter is adjusted to range from 1/10 to 1/2 of the inner diameter of the tube.

**11.** The reactor of any preceding claim, wherein a ratio of a length of the tube to an inner diameter of the tube (L/D) ranges from 5 to 50.

**12.** A system for pyrolysis of methane, which comprises:

a rotary kiln-type reactor which is connected to a storage device of iron oxide-containing catalysts and a supply line of methane-containing feedstock, respectively, and forms pyrolysis products containing unreacted methane, carbon, hydrogen, and carbon monoxide by pyrolizing methane in the methane-containing feedstock in the presence of the iron oxide-containing catalysts;
a gas-solid separator for separating a gas mixture containing the unreacted methane, the hydrogen, the carbon monoxide, and an iron (Fe)-containing carbon-based solid from the pyrolysis products;
a gas separation unit for separating the gas mixture into unreacted methane, hydrogen and carbon monoxide, respectively;
wherein the rotary kiln-type reactor comprises:

a tube configured to accommodate the iron oxide-containing catalysts as solid particles and the methane-containing feedstock as gas, and to be rotatable;
a heater configured to supply controlled heat to an inner space of the tube;
a helix baffle configured to extend along an inner circumferential surface of the tube to induce the accommodated iron oxide-containing catalysts to move forward in a longitudinal direction of the tube according to rotation of the tube; and
at least one lifter provided on the inner circumferential surface of the tube to disperse the accommodated iron oxide-containing catalysts in the tube.

**13.** The system of claim 12, which further comprises a splitter for recycling methane, disposed downstream of the gas separation unit, such that the recycled methane is combined with the methane-containing feedstock.

**14.** The system of claim 12 or 13, wherein the gas separation unit is a pressure swing adsorption (PSA) unit, a vacuum swing adsorption (VSA), or a membrane separation unit.

**15.** The system of any preceding claim, which further comprises a post-processing unit to subject the iron (Fe)-containing carbon-based solid to purification for other end uses.

Fig. 1

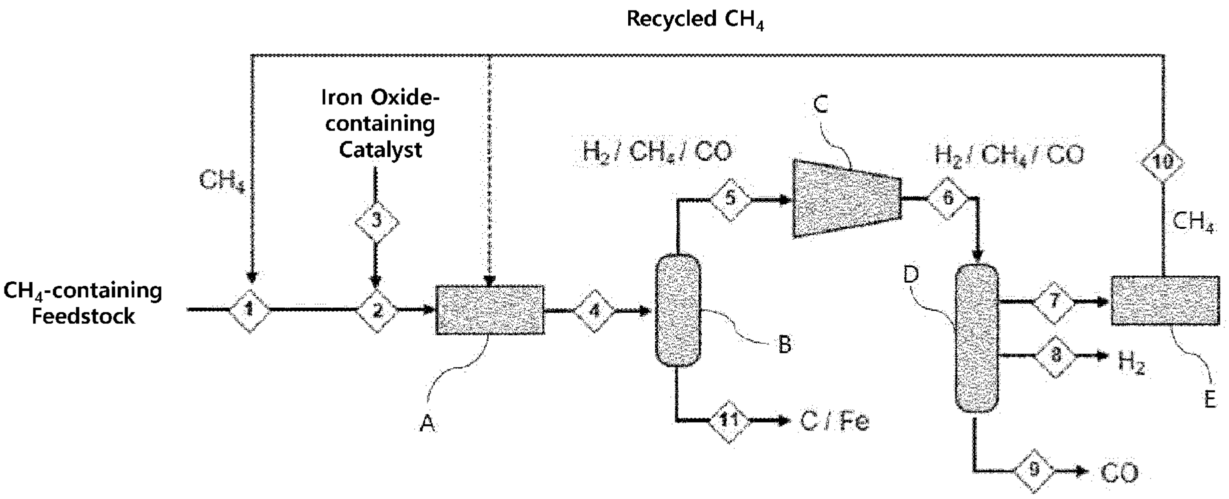
Recycled $CH_4$
Iron Oxide-containing Catalyst
$CH_4$
$CH_4$-containing Feedstock
$H_2$ / $CH_4$ / CO
C
$H_2$ / $CH_4$ / CO
$CH_4$
1
2
3
4
5
6
7
8
9
10
11
A
B
D
E
C / Fe
$H_2$
CO

Fig. 2

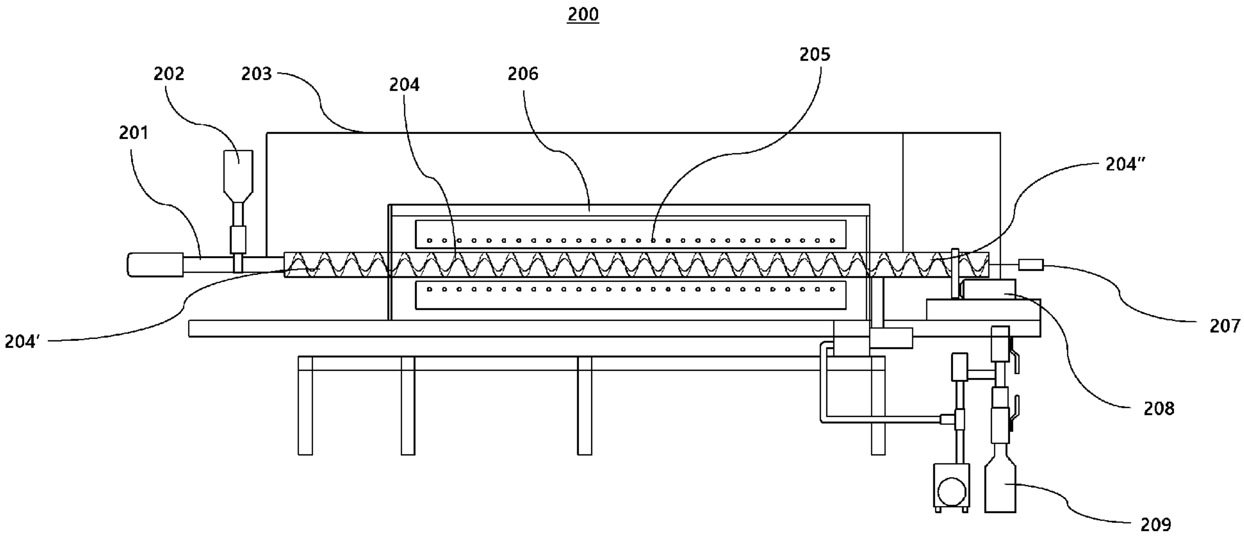

Fig. 3A

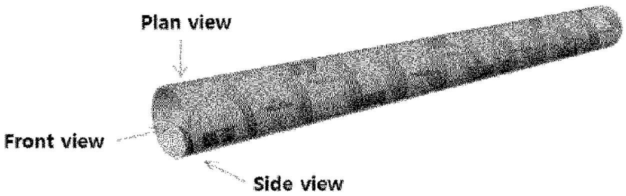


Fig. 3B

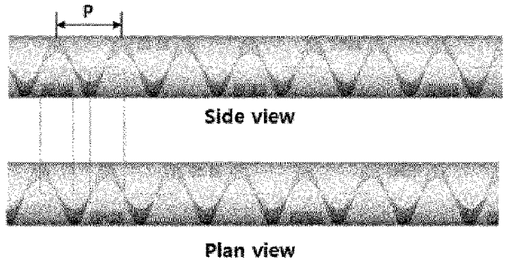


Fig. 3C

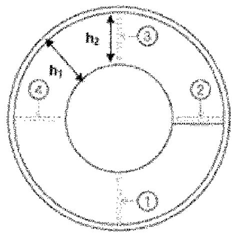


Front view

Fig. 4

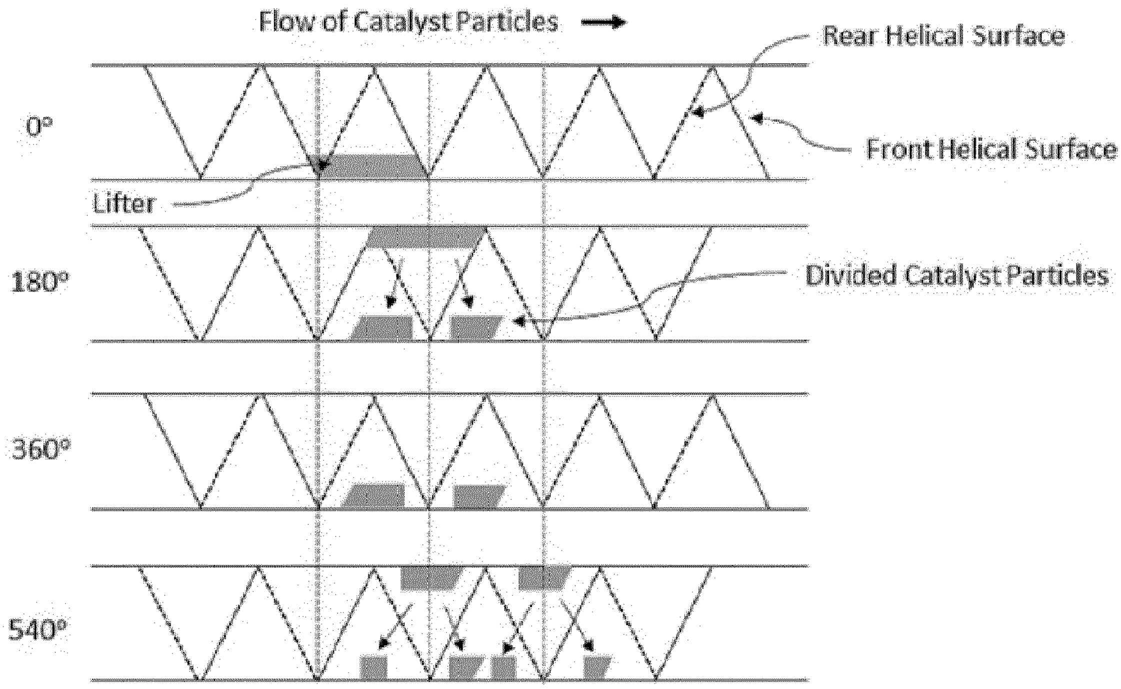
Flow of Catalyst Particles
Rear Helical Surface
0°
Front Helical Surface
Lifter
180°
Divided Catalyst Particles
360°
540°

Fig. 5B

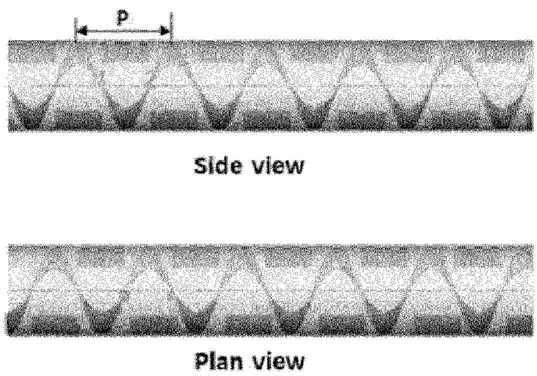


Fig. 5A

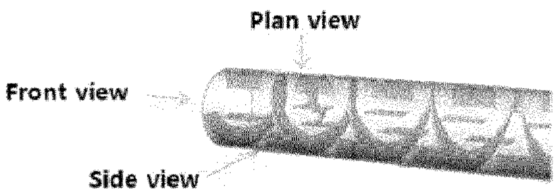


Fig. 5C

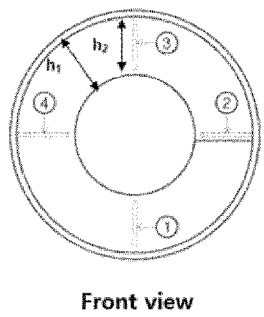

Fig. 6A

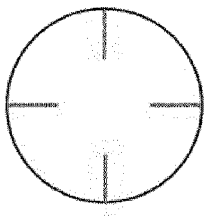

Fig. 6B

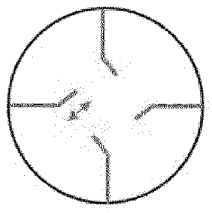

Fig. 6C

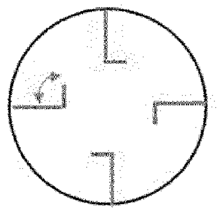

Fig. 7

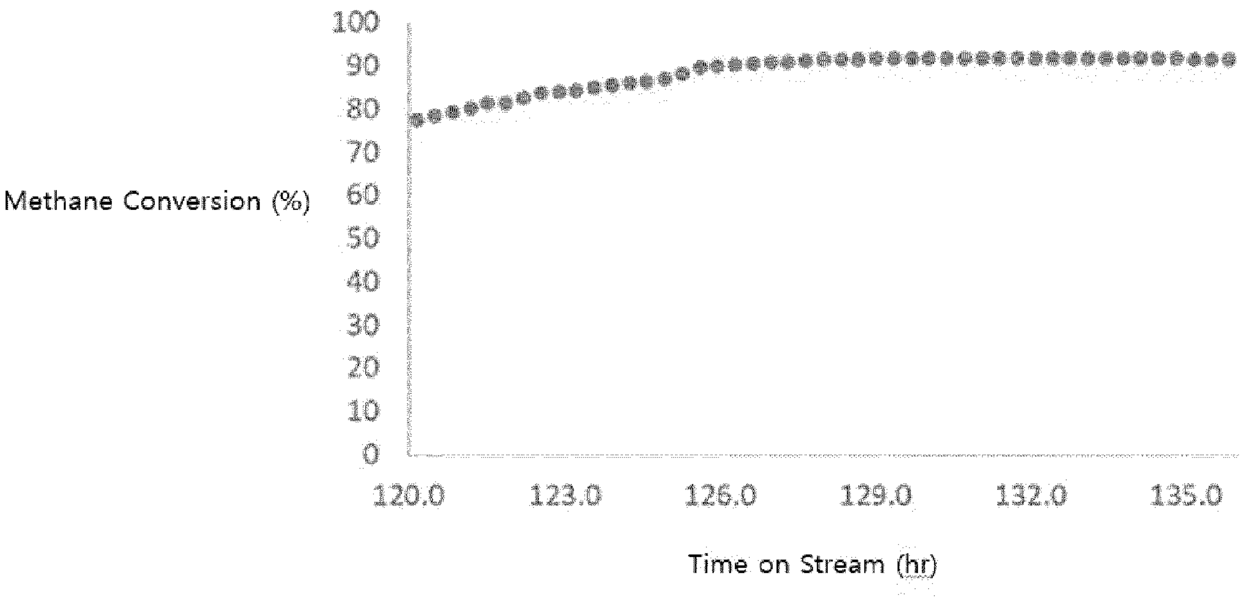
100
90
80
70
60
50
40
30
20
10
0
Methane Conversion (%)
120.0
123.0
126.0
129.0
132.0
135.0
Time on Stream (hr)

Fig. 8

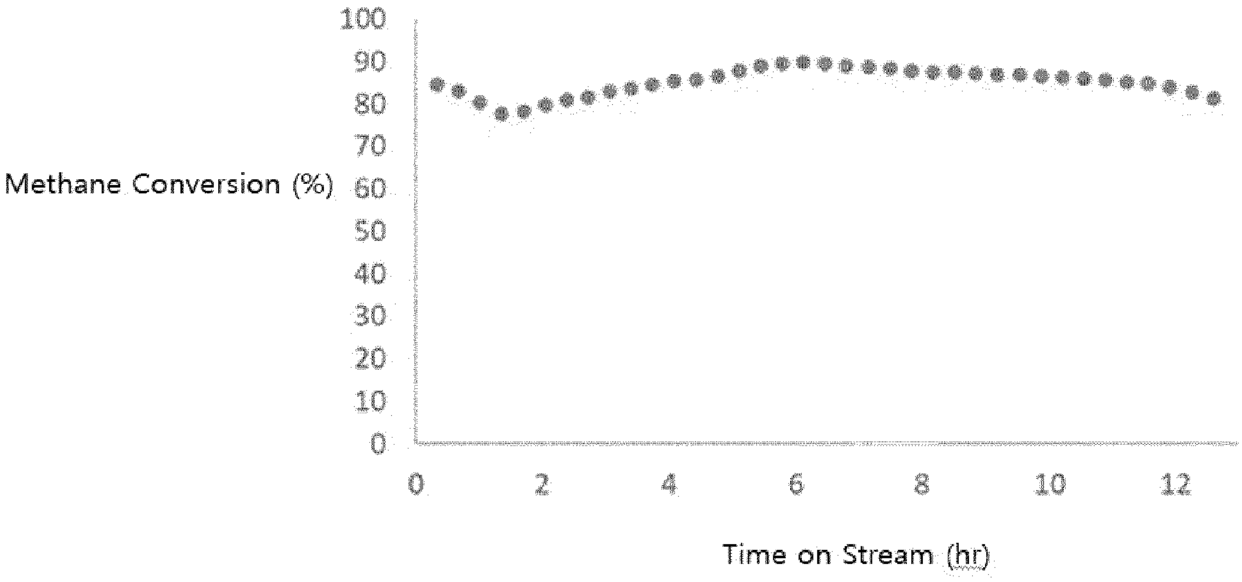
100
90
80
70
Methane Conversion (%)
60
50
40
30
20
10
0
0
2
4
6
8
10
12
Time on Stream (hr)

Fig. 9

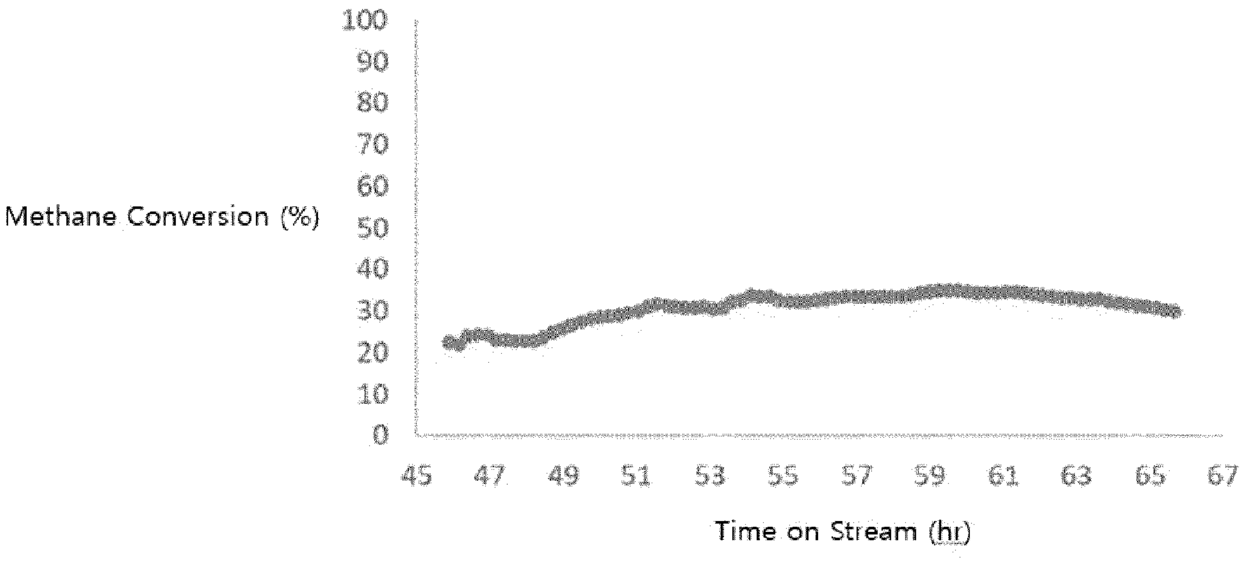
100
90
80
70
60
50
40
30
20
10
0
Methane Conversion (%)
45
47
49
51
53
55
57
59
61
63
65
67
Time on Stream (hr)

Fig. 10

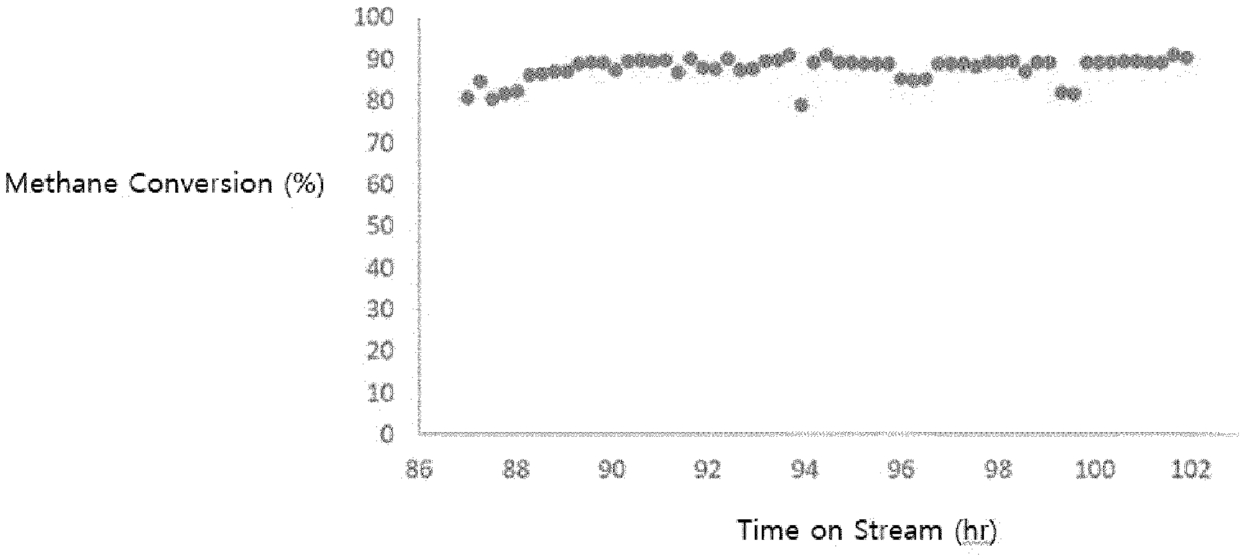
100
90
80
70
60
50
40
30
20
10
0
Methane Conversion (%)
86
88
90
92
94
96
98
100
102
Time on Stream (hr)

Fig. 11

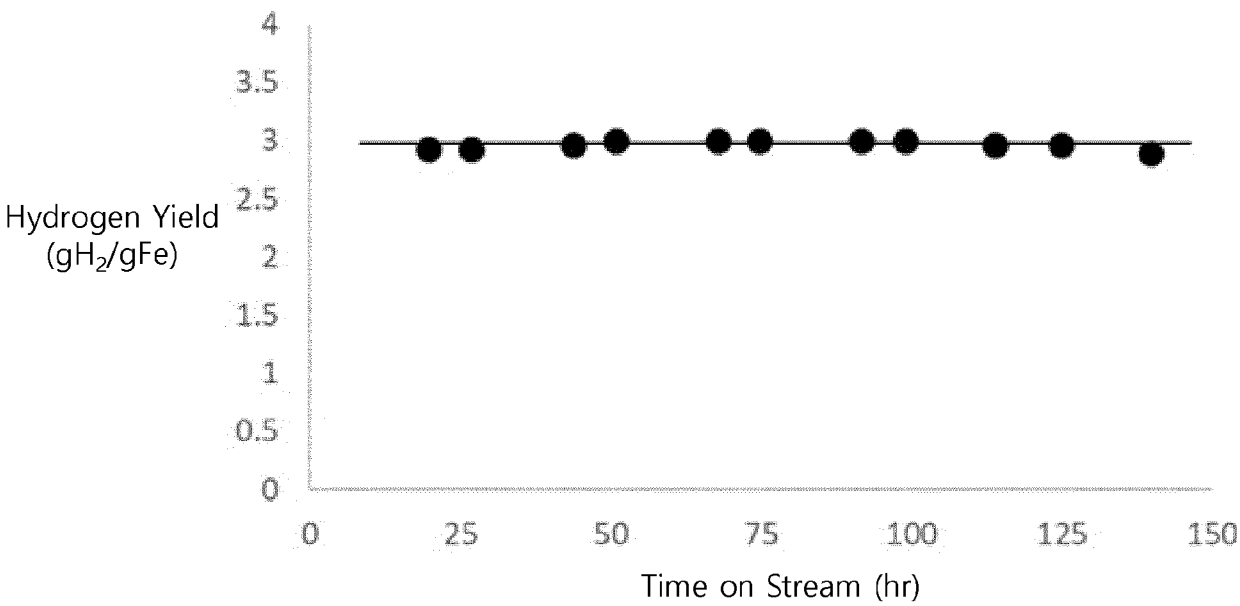
4
3.5
3
2.5
2
1.5
1
0.5
0
Hydrogen Yield
(gH2/gFe)
0
25
50
75
100
125
150
Time on Stream (hr)

Fig. 12

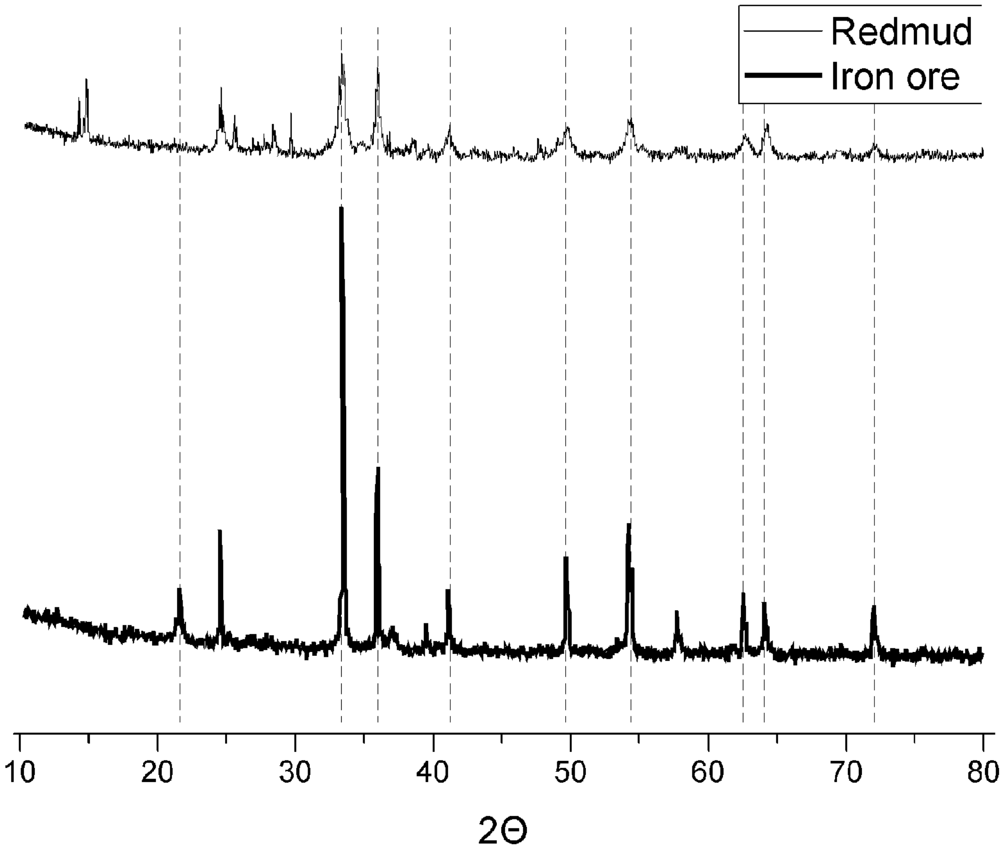

Fig. 13

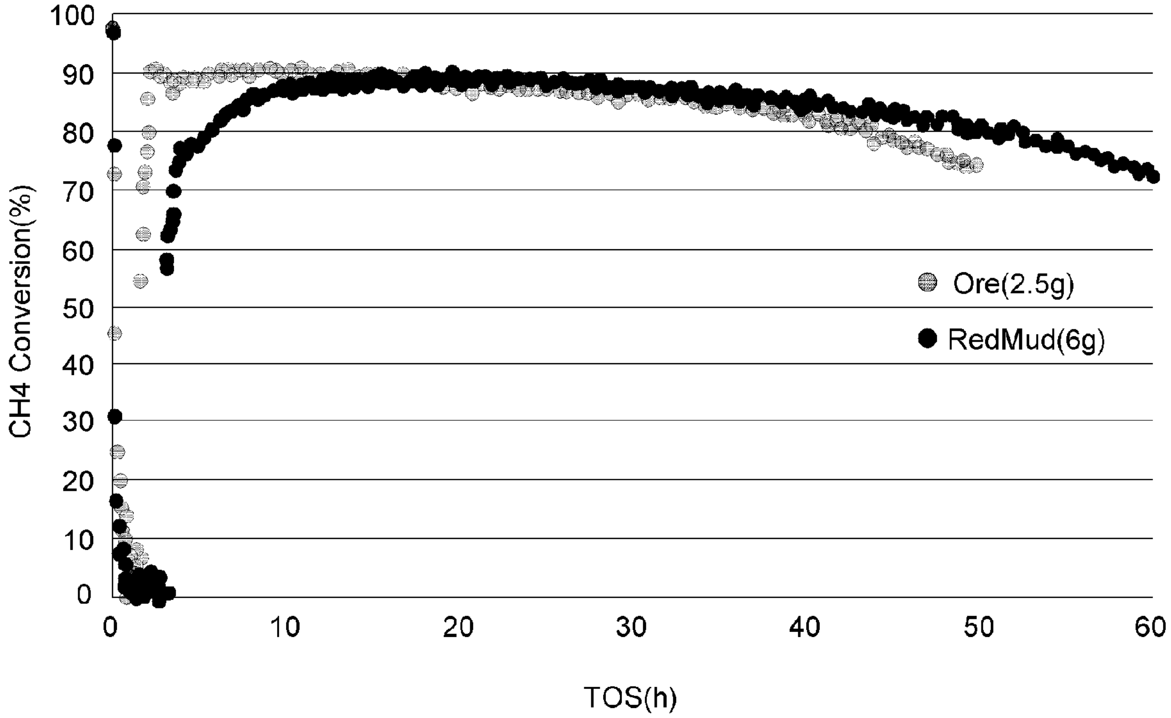
100
90
80
70
60
50
40
30
20
10
0
CH4 Conversion(%)
0
10
20
30
40
50
60
TOS(h)
Ore(2.5g)
RedMud(6g)

Fig. 14

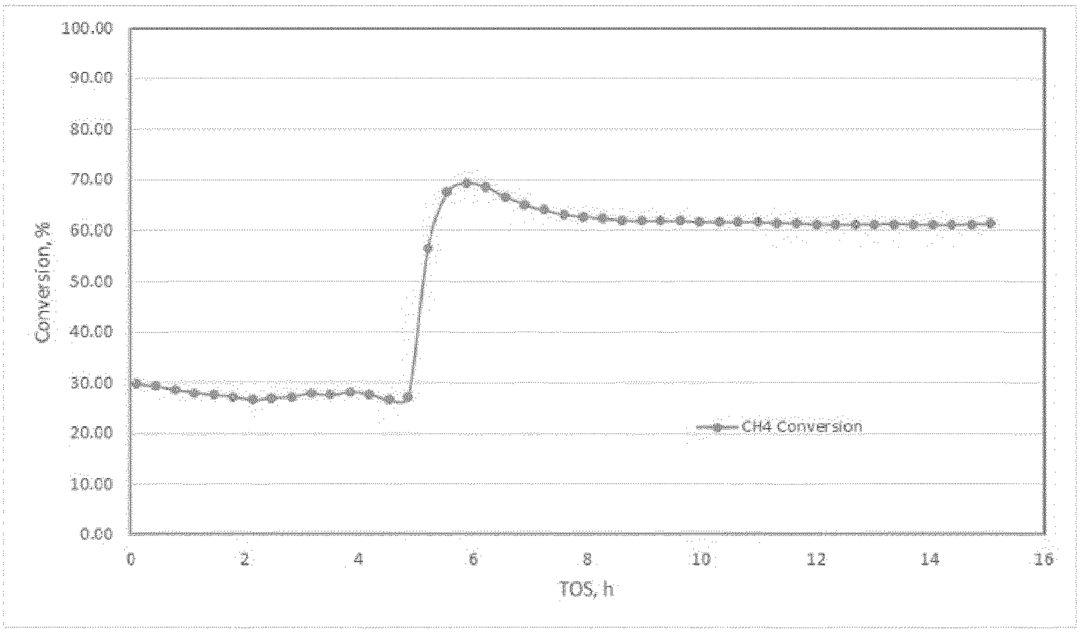
100.00
90.00
80.00
70.00
60.00
50.00
40.00
30.00
20.00
10.00
0.00
Conversion, %
0
2
4
6
8
10
12
14
16
TOS, h
CH4 Conversion

Fig. 15

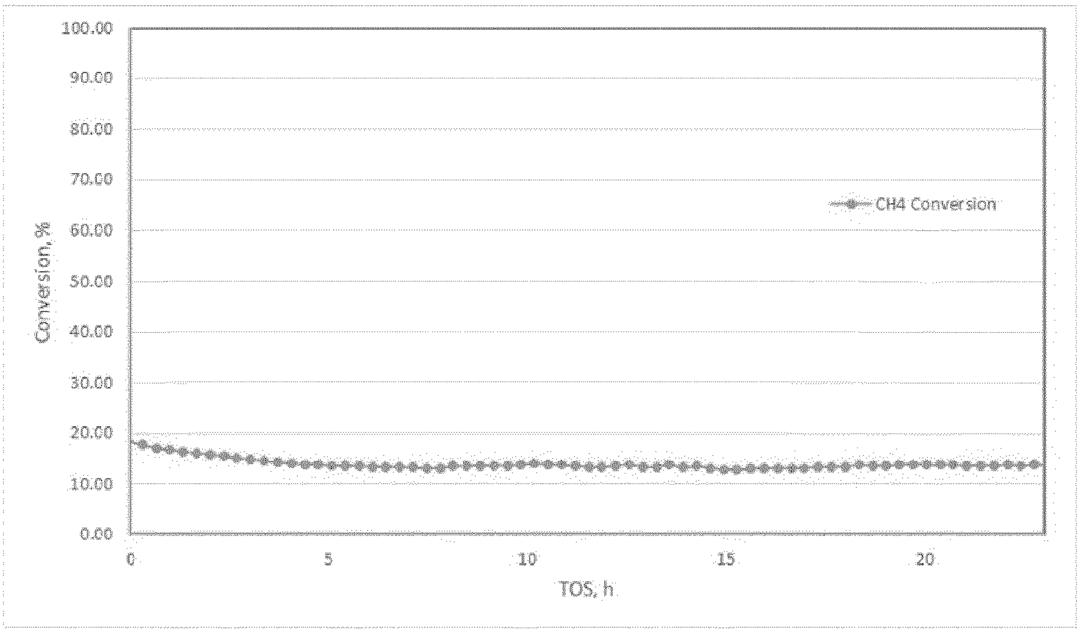
100.00
90.00
80.00
70.00
60.00
50.00
40.00
30.00
20.00
10.00
0.00
Conversion, %
CH4 Conversion
0
5
10
15
20
TOS, h

Fig. 16

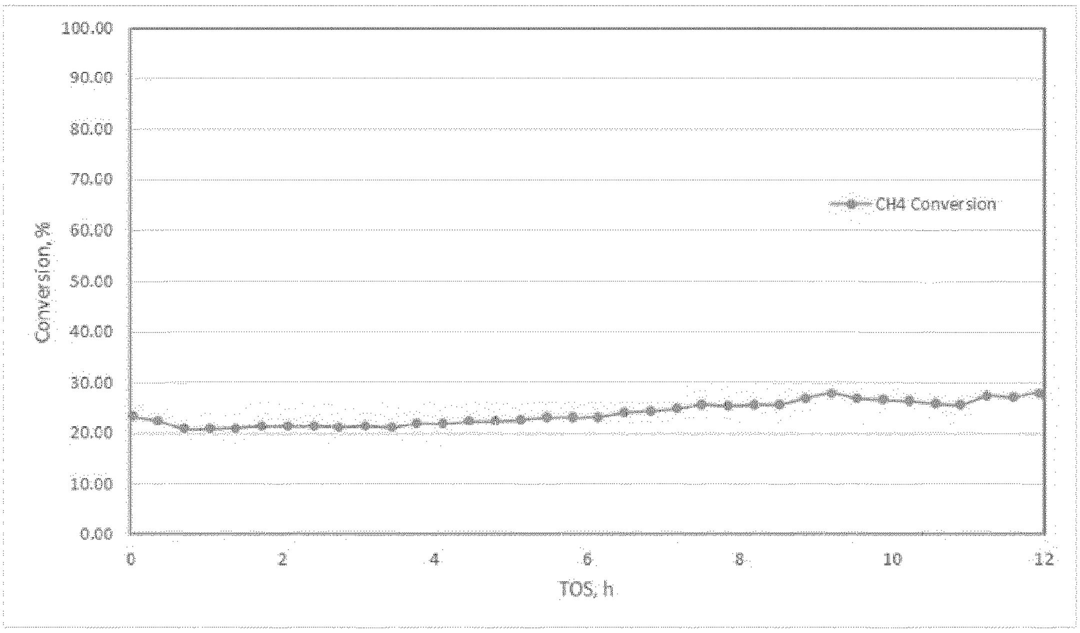
100.00
90.00
80.00
70.00
60.00
50.00
40.00
30.00
20.00
10.00
0.00
Conversion, %
CH4 Conversion
0
2
4
6
8
10
12
TOS, h

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020180113448


### Non-patent literature cited in the description


- *Int. J. Hydrogen Energy,* vol. 18 (3), 211-215